# EUROPEAN PATENT SPECIFICATION

(11) **EP 2 077 218 B1**
(45) Date of publication and mention of the grant of the patent: **01.03.2017**
(21) Application number: 08254123.6
(22) Date of filing: 23.12.2008
(51) Int. Cl.: B62J 15/00

(54) **Front fender and motorcycle**
Vorderer Stoßfänger und Motorrad
Garde-boue avant et motocyclette

(30) Priority: 28.12.2007 JP 2007338785
(43) Date of publication of application: 08.07.2009
(73) Proprietor: Yamaha Hatsudoki Kabushiki Kaisha, Shizuoka-ken Shizuoka 438-8501 (JP)
(72) Inventor: Shibata, Masanori, Iwata-shi Shizuoka-ken 438-8501 (JP)
(74) Representative: Moreland, David

(56) References cited:
- DE-A1- 3 831 793
- JP-A- 5 254 469
- JP-A- 2004 338 467
- US-A- 4 982 973

## Description

### FIELD OF THE INVENTION

The present invention relates to a front fender for covering an upper side of a front wheel and a motorcycle having the front fender.

### BACKGROUND TO THE INVENTION

In order to repel sand, mud and the like spattered by a front wheel, a motorcycle is typically provided with a front fender above the front wheel. Such an arrangement is disclosed in, for example, JP-A-2004-338467. The prior-art front fender has smooth lines from its front end to rear end.

If the prior-art front fender is used, a sufficient clearance is required so as to prevent contact of the front fender with members of a vehicle frame in the most compressed condition of front forks. Therefore, if the front fender need to be increased in size so as to secure rigidity, it becomes difficult to secure the clearance between the front fender and the members of the vehicle frame, resulting in limitations imposed on a degree of freedom in design of the motorcycle.

Another example of a front fender is described in US4982973 which is considered to represent the closest prior art.

This document describes a front fender for a front forked vehicle, wherein the front fender includes longitudinally extending air passages having inlets that extend in front of the forwardly exposed portions of the vehicle forks to direct air around the fork and toward the engine. The front forks comprise right and left fork legs and a pair of upper and lower bridges/crowns connecting the fork legs to each other at upper portions thereof. The front fender of synthetic resin is secured to an underside of the lower bridge/crown of the forks using bolts. A pair of longitudinally extending ribs extend from an upper surface of the fender. Outwardly of the ribs, a pair of guide walls rise from opposite edges of the of the fender body. The ribs and guide walls together define a pair of air passages extending above the upper surface of the fender body. Mounting bosses located at rear portions of the ribs are fitted to the under-side of the lower bridge/crown of the forks and secured thereto by bolts. This document arguably shows a step in the front fender provided at a rear part of the mounting bosses at the rear of the ribs.

The present invention has been made with the above point in view and it is a main object of the invention to provide a front fender with which the degree of freedom in design of the motorcycle can be increased.

### SUMMARY OF THE INVENTION

According to an aspect of the present invention there is provided motorcycle according to claim 1 comprising a front fender configured to be fixable to outer tubes of a pair of front forks of a vehicle to cover an upper side of a front wheel supported by the front forks, said front fender comprising a step at a portion arranged to be located rearward of associated front forks, wherein the step has such a shape that a portion of the front fender positioned rearward of the step is closer to an associated front wheel than a portion of the front fender positioned forward of the step.

The step may have such a shape that a rear end portion positioned on a rear end side of the front fender is closer to the associated front wheel than a front portion positioned on a front end side of the step of the front fender.

A side face of the front fender may be formed with ridge lines.

A front portion and a rear portion of the front fender with respect to the step may be color-coded.

A front portion of the front fender may have a coated surface in a first color. A rear portion of the front fender may have a non-coated surface in a second color. The second color may be different from the first color.

A portion in front of the step and close to an associated front fork may be formed with a reinforcing member.

The motorcycle may comprise:
a pair of front forks;
a wheel supported by the front fork; and
a front fender fixed to outer tubes of the front forks to cover an upper side of the wheel, wherein the front fender comprises a step at a portion arranged to be located rearward of the step and has such a shape that a portion of the front fender positioned rearward of the step is closer to the wheel than a portion of the front fender positioned forward of the step.

A front fender according to the present invention is a front fender fixable to outer tubes of a pair of front forks for pivoting a front wheel. The front fender covers an upper side of the front wheel. The front fender is provided with a step at its portion behind the front forks. The step has such a shape that a rear side portion behind the portion provided with the step is closer to the front wheel than a front side portion in front of the portion provided with the step.

According the invention, the front fender is provided with the step at its portion behind the front forks. With the step, the rear side portion behind the step is closer to the front wheel than the front side portion in front of the step. Therefore, it is easy to secure a sufficient clearance to prevent contact of the front fender with members of a vehicle frame in a most compressed condition of the front forks. As a result, it is possible to increase a degree of freedom in design of the motorcycle.

### BRIEF DESCRIPTION OF THE DRAWINGS

These and other aspects of the present invention are now described, by way of example only, with reference to the accompanying drawings, in which:
Fig. 1 is a general side view of a motorcycle according
   to an embodiment of the present invention;
Fig. 2 is a side view of a front fender according to the embodiment of the invention;
Fig. 3 is a perspective view of the front fender according to the embodiment of the invention;
Fig. 4 is a perspective view of the front fender according to the embodiment of the invention;
Fig. 5 is an exploded perspective view of the front fender according to the embodiment of the invention;
Fig. 6 is a side view for explaining a state of a front fender in a most-compressed condition;
Fig. 7 is a side view for explaining a state of a front fender in a most-compressed condition;
Fig. 8 is a schematic diagram showing a form of a step of the front fender;
Fig. 9 is a schematic diagram showing a form of the step of the front fender; and
Fig. 10 is a schematic diagram showing a form of the step of the front fender.

### DETAILED DESCRIPTION OF THE DRAWINGS

An embodiment of the present invention will be described below with reference to the drawings. In the following drawings, components having substantially the same functions will be shown with the same reference numerals to simplify the description. The invention is not limited to the following embodiment.

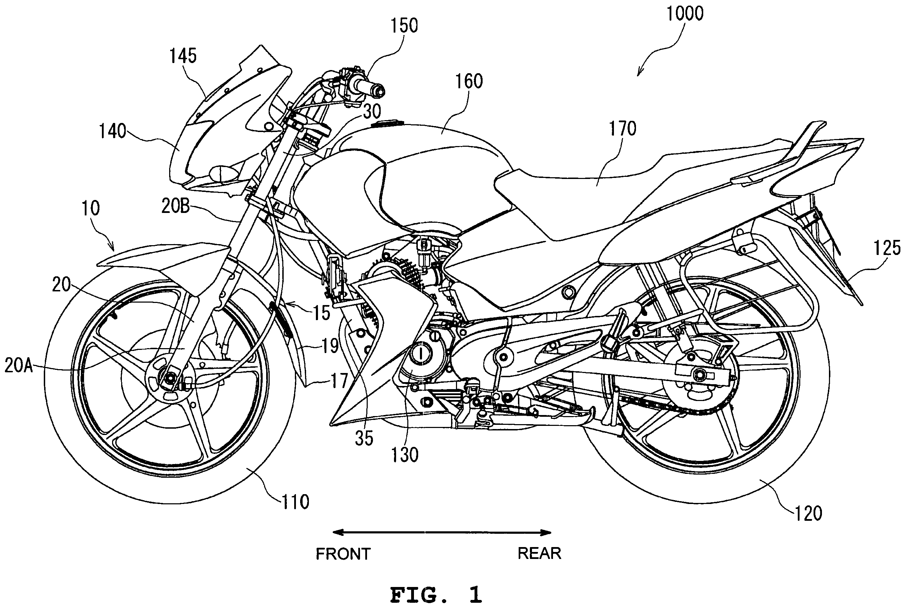

With reference to FIGS. 1 to 4, a motorcycle 1000 according to the embodiment of the invention will be described.

FIG. 1 is a general side view of the motorcycle 1000 according to the embodiment. As shown in FIG. 1, the motorcycle 1000 of the embodiment is formed of a front wheel 110, a rear wheel 120, and a drive source (engine) 130 provided between the front wheel 110 and the rear wheel 120.

The front wheel 110 is rotatably supported by front forks 20. Each of the front forks 20 in this example is formed of an outer tube 20A and an inner tube 20B. The front wheel 110 is covered with a front fender 10 provided above it. The rear wheel 120 is covered with a rear fender 125.

The front forks 20 are connected to handlebars 150 with head pipes 30 interposed therebetween. From the head pipes 30, a down tube 35 extends diagonally downward and rearward. Behind the handlebars 150, a fuel tank 160 and a seat 170 on which a rider is seated are provided. Below (or diagonally behind and below) the seat 170, the rear wheel (driving wheel) 120 is positioned.

In front of the handlebars 150, a headlight 140 is positioned. Above the headlight 140, a front cover 145 is provided. In the embodiment, the headlight 140 is covered with the front cover 145. Between the front cover 145 and the handlebars 150, a meter or the like is disposed.

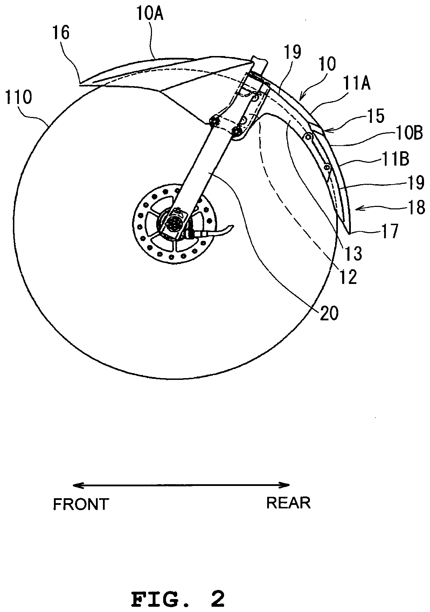

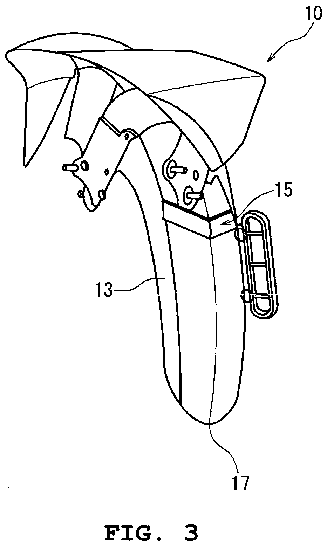

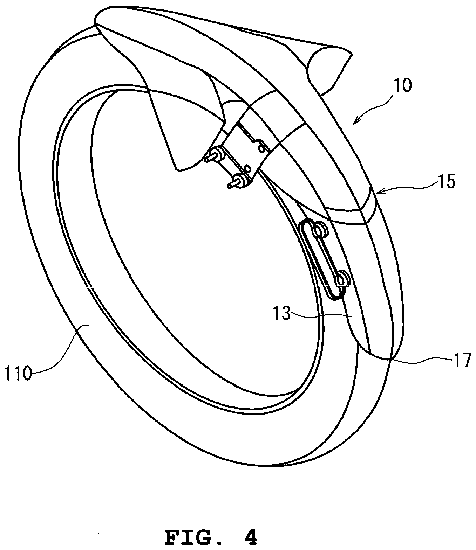

FIG. 2 is a side view showing a structure of the front fender 10 of the embodiment. FIG. 3 is a perspective view of the front fender 10. FIG. 4 is a perspective view of the front fender 10 and the front wheel 110 mounted to each other.

The front fender 10 of the embodiment is fixed to the front forks 20. The front fender 10 covers an upper side of the front wheel 110. The front fender 10 is made of resin, for example. A thickness of material of the front fender 10 is about 2.0 to 3.0 mm, for example.

A portion 10B of the front fender 10 behind the front forks 20 is formed with a step 15. The step 15 has such a shape that a rear side portion 11B behind the portion provided with the step 15 is closer to the front wheel 110 than a front side portion 11A in front of the portion provided with the step 15. The step 15 of the embodiment may be formed so that the rear side portion 11B is closer to the front wheel 110 than the front side portion 11A by about 5.0 to 7.0 mm, for example.

Moreover, the step 15 of the embodiment has such a shape that a rear end portion 18 positioned on a rear end 17 side of the front fender 10 is closer to the front wheel 110 than the front portion 11A which is positioned closer to a front end 16 side than the step 15 of the front fender 10. In the example shown in the drawings, the rear end 17 of the front fender 10 is closer to the front wheel 110 than the front portion 11A.

On side faces 13 of the front fender 10 of the embodiment, ridge lines 19 are formed. The front portion 11A and the rear portion 11B of the front fender 10 with respect to the step are color-coded. Here, the front portion 11A has a coated surface in a first color (e.g., red) and the rear portion 11B has a non-coated surface in a second color (e.g., black) different from the first color (e.g., red).

Moreover, in the structure of the embodiment, a reinforcing member 12 is formed at a portion of the front fender 10 in front of the step 15 and near the front forks 20. The reinforcing member 12 in the embodiment is referred to as a "fork brace", has an inverted U shape, and is formed of a steel sheet, for example.

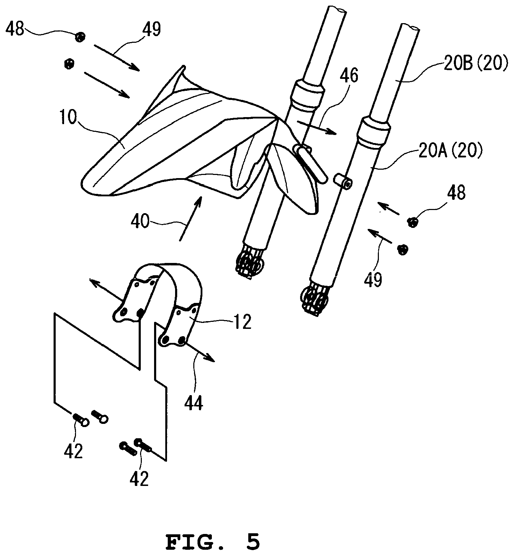

FIG. 5 is an exploded perspective view for explaining a mounted state of the front fender 10 and the reinforcing member (fork brace) 12 in the embodiment. As shown in FIG. 5, the inverted-U-shaped reinforcing member 12 is mounted into an inner side of the front fender 10 (see an arrow 40) and then fixed by fastening members (e.g., bolts, screws) 42 (see arrows 44). Then, the front fender 10 is set between the front forks 20 (see an arrow 46) and fixed to the front forks 20 by fastening members (e.g., bolts, screws) 48 (see arrows 49).

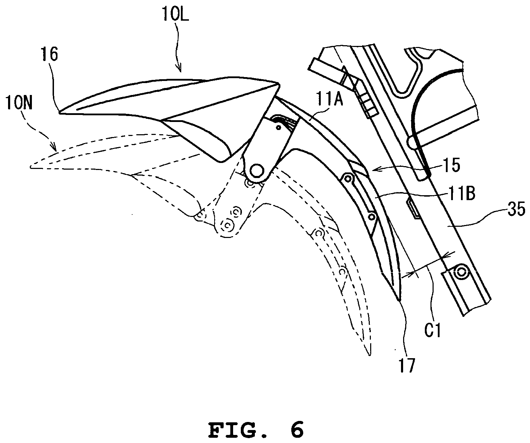

FIG. 6 is a view for explaining a state of the front fender 10 (10L) in the most compressed condition of front forks 20. The front fender 10 in the embodiment comes close to the down tube 35 (or members of the vehicle frame side) from a state of the normal front fender 10N to a state of the most compressed front fender 10L. In the structure of the embodiment, the front fender 10 is formed with the step 15 and the rear side portion 11B is closer to the front wheel 110 than the front side portion 11A due to the step 15. Therefore, a clearance C1 may be readily achieved.

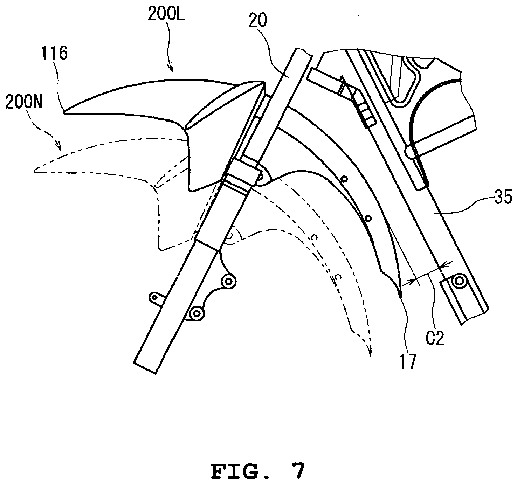

FIG. 7 is a view for explaining a state in which a front fender 200 according to a comparative example is used. The front fender 200 in the comparative example has smooth lines from a front end 116 to a rear end 117 and is not formed with the step 15 of the embodiment. Therefore, when the front fender 200 comes close to the down tube 35 from a state of the normal front fender 200N to the most compressed front fender 200L, a distance between the front fender 200L and the down tube 35 (clearance C2) is shorter than that in the structure of the embodiment. Therefore, restrictions are imposed in such manners that the front fender 200 has to be reduced in size and that no member can be mounted around the down tube 35.

With the structure of the embodiment, it is possible to ease the restrictions described by using FIG. 7 and, as a result, it is possible to increase a degree of freedom in design of the motorcycle.

Moreover, the front fender 10 formed with the step 15 has increased rigidity as compared with the front fender 200 without the step. Normally, the front fender also increases in weight when it increases in rigidity. However, in the structure of the embodiment, rigidity of the front fender is increased not by adding a new member but by forming the step at the front fender 10. Therefore, it is possible to avoid increase in weight due to increase in rigidity.

Furthermore, in the structure of the embodiment, the step 15 has such a shape that the rear end portion 18 positioned on the rear end 17 side of the front fender 10 is closer to the front wheel 110 than the front portion 11A and therefore, this shape close to the front wheel 110 can enhance a function of the front fender to prevent mud spattering.

Moreover, the front fender 10 in the embodiment is formed on the side faces 13 thereof with the ridge lines 19, which also contributes to increase in rigidity of the front fender while suppressing increase in weight. In the structure of the embodiment, the reinforcing member (fork brace) 12 is formed at the portion of the front fender 10 near the front forks 20 and the reinforcing member 12 advantageously increases strength while suppressing increase of the front fender 10 in size.

In the embodiment, the front portion 11A and the rear portion 11B of the front fender 10 are color-coded with respect to the step. In this color-coding, the front portion 11A has a coated surface in a first color (e.g., red) and the rear portion 11B has a non-coated surface for weight reduction. Because the rear portion 11B has the non-coated surface, the rear portion 11B is in a color of material (e.g., black) of the front fender 10.

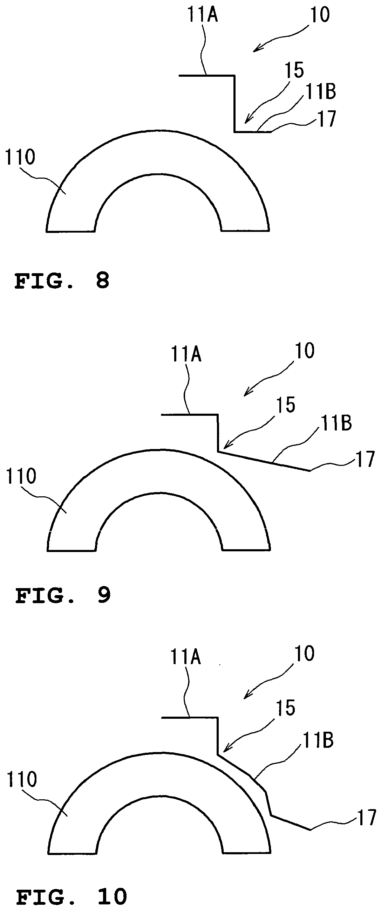

Although the step 15 has an inclined face (tapered face) between the front portion 11A and the rear portion 11B in the above-described embodiment, it is not limited to this shape. Step 15 has only to be in such a shape that the rear portion 11B is closer to the front wheel 110 than the front portion 11A as shown in FIG. 8.

Alternatively, the rear end portion 18 positioned at the rear end 17 may extend away from the front wheel 110 as shown in FIG. 9, if the rear portion 11B is closer to the front wheel 110 than the front portion 11A due to the step 15. Similarly, the rear portion 11B may be close to the front wheel 110 and only the last rear end portion 18 may rise away from the front wheel 110 as shown in FIG. 10.

Although an example of the invention has been described as a preferred embodiment, it will be appreciated that the scope of the invention is defined by the claims.

According to the invention, it is possible to provide a front fork mount structure including a small number of parts and a saddle-type vehicle having the structure.

### Explanation of Reference Numerals

- 10: front fender
- 12: reinforcing member
- 13: side faces of front fender
- 15: step
- 16: front end of front fender
- 17: rear end of front fender
- 18: rear end portion
- 19: ridge line
- 20: front fork
- 20A: outer tube
- 20B: inner tube
- 30: head pipe
- 35: down tube
- 100: front cover
- 110: front wheel
- 116: front end
- 117: rear end
- 125: rear fender
- 120: rear wheel
- 140: headlight
- 145: front cover
- 150: handlebars
- 160: fuel tank
- 170: seat
- 1000: motorcycle

## Claims

1. A motorcycle (1000) comprising:
a pair of front forks (20) connected to handlebars (150) with a head pipe (30) interposed therebetween;
a downtube (35) that extends diagonally downward and rearward from the head pipe (30);
a wheel (110) supported by the front fork (20); and
a front fender (10) fixed to the front forks (20) to cover an upper side of the wheel (110), wherein the front fender (10) comprises a step (15) at a portion arranged to be located rearward of the front forks (20), wherein a portion of the front fender (10) positioned rearward of the step (15) is closer to the wheel (110) than a portion of the front fender (10) positioned forward of the step (15) due to the step (15); wherein
the step (115) is spaced rearwardly from the portions of the front fender (10) for mounting the front fender (10) to the forks (20) on a portion of the front fender that approaches the downtube in a most compressed condition of the front forks; and
the step (15) is formed by a front side portion (11A) and a rear side portion (11B) that is closer to the front wheel than the front side portion (11A).

2. A motorcycle (1000) according to claim 1, wherein the step (15) has such a shape that a rear end portion (18) positioned on a rear end (17) side of the front fender (10) is closer to the associated front wheel (110) than a front portion positioned on a front end (16) side of the step (15) of the front fender (10).

3. A motorcycle (1000) according to claim 1 or 2, wherein a side face of the front fender is formed with ridge lines (19).

4. A motorcycle (1000) according to any preceding claim, wherein a front portion and a rear portion of the front fender with respect to the step (15) are color-coded.

5. A motorcycle (1000) according to any preceding claim, wherein a front portion of the front fender (10) has a coated surface in a first color and a rear portion of the front fender (10) has a non-coated surface in a second color different from the first color.

6. A motorcycle (1000) according to any preceding claim, wherein a portion in front of the step (15) and close to an associated front fork (20) is formed with a reinforcing member (12).

## Patentansprüche

1. Motorrad (1000), umfassend:
ein Paar Vordergabeln (20), welche mit Lenkstangen (150) durch Zwischenschaltung eines Kopfrohrs (30) verbunden sind;
ein Unterrohr (35), welches sich schräg nach unten und nach hinten vom Kopfrohr (30) erstreckt;
ein Rad (110), welches von der Vordergabel (20) getragen wird; und
einen vorderen Stoßfänger (10), welcher an den Vordergabeln (20) befestigt ist, um eine Oberseite des Rads (110) zu bedecken, wobei der vordere Stoßfänger (10) einen Absatz (15) an einem Abschnitt umfasst, welcher angeordnet ist, um sich hinter den Vordergabeln (20) zu befinden, wobei ein Abschnitt des vorderen Stoßfängers (10), welcher sich hinter dem Absatz (15) befindet, dem Rad (110) näher liegt als ein Abschnitt des vorderen Stoßfängers (10), welcher vor dem Absatz (15) angeordnet ist, wegen des Absatzes (15); wobei
der Absatz (115) rückwärts von Abschnitten des vorderen Stoßfängers (10) distanziert ist zum Montieren des vorderen Stoßfängers (10) auf den Gabeln (20) auf einem Abschnitt des vorderen Stoßfängers, welcher sich in einer maximal zusammengedrückten Lage der Vordergabeln dem Unterrohr nähert; und
der Absatz (15) aus einem vorderen Seitenabschnitt (11A) und einem hinteren Seitenabschnitt (11B) besteht, welcher dem Vorderrad näher liegt als der vordere Seitenabschnitt (11A).

2. Motorrad (1000) nach Anspruch 1, wobei der Absatz (15) eine solche Form hat, dass ein hinterer Endabschnitt (18), welcher auf einer hinteren Endseite (17) des vorderen Stoßfängers (10) angeordnet ist, dem zugeordneten Vorderrad (110) näher liegt als ein Vorderabschnitt, welcher auf einer vorderen Endseite (16) des Abschnitts (15) des vorderen Stoßfängers (10) angeordnet ist.

3. Motorrad (1000) nach Anspruch 1 oder 2, wobei eine Seitenfläche des vorderen Stoßfängers mit Firstlinien (19) geformt ist.

4. Motorrad (1000) nach einem der vorhergehenden Ansprüche, wobei ein vorderer Abschnitt und ein hinterer Abschnitt des vorderen Stoßfängers, mit Bezug auf den Absatz (15), eine Farbcodierung aufweisen.

5. Motorrad (1000) nach einem der vorhergehenden Ansprüche, wobei ein vorderer Abschnitt des vorderen Stoßfängers (10) eine beschichtete Oberfläche in einer ersten Farbe und ein hinterer Abschnitt des vorderen Stoßfängers (10) eine unbeschichtete Oberfläche in einer zweiten, von der ersten Farbe unterschiedlichen Farbe aufweist.

6. Motorrad (1000) nach einem der vorhergehenden Ansprüche, wobei ein vor dem Absatz (15) angeordneter und einer zugeordneten Vordergabel (20) nahe liegender Abschnitt mit einem Verstärkungselement (12) geformt ist.

## Revendications

1. Motocycle (1000), comprenant:
une paire de fourches avant (20) connectées à un guidon (150), un tube de tête (30) étant agencé entre elles ;
un tube diagonal (35) s'étendant diagonalement vers le bas et vers l'arrière à partir du tube de tête (30) ;
une roue (110) supportée par la fourche avant (20) ; et
un garde-boue avant (10) fixé sur les fourches avant (20) pour recouvrir un côté supérieur de la roue (110), dans lequel le garde-boue avant (10) comprend un marchepied (15) au niveau d'une partie agencée de sorte à se situer vers l'arrière des fourches avant (20), dans lequel une partie du garde-boue avant (10), positionnée vers l'arrière du marchepied (15) est plus proche de la roue (110) qu'une partie du garde-boue avant (10) positionnée vers l'avant du marchepied (15), par suite de la présence du marchepied (15), dans lequel :
le marchepied (115) est espacé vers l'arrière des parties du garde-boue avant (10) pour monter le garde-boue avant (10) sur les fourches (20) sur une partie du garde-boue avant se rapprochant du tube diagonal dans un état à compression maximale des fourches avant ; et
le marchepied (15) est formé par une partie du côté avant (11A) et une partie du côté arrière (11B) plus proche de la roue avant que la partie du côté avant (11A).

2. Motocycle (1000) selon la revendication 1, dans lequel le marchepied (15) a une forme telle qu'une partie d'extrémité arrière (18) positionnée sur un côté d'extrémité arrière (17) du garde-boue avant (10) est plus proche de la roue avant associée (110) qu'une partie avant positionnée sur un côté d'extrémité avant (16) du marchepied (15) du garde-boue avant (10).

3. Motocycle (1000) selon la revendication 1 ou 2, dans lequel une face latérale du garde-boue avant comporte des lignes nervurées (19).

4. Motocycle (1000) selon l'une quelconque des revendications précédentes, dans lequel une partie avant et une partie arrière du garde-boue avant par rapport au marchepied (15) comporte un codage de couleur.

5. Motocycle (1000) selon l'une quelconque des revendications précédentes, dans lequel une partie avant du garde-boue avant (10) comporte une surface revêtue dans une première couleur, une partie arrière du garde-boue avant (10) comportant un surface non revêtue dans une deuxième couleur, différente de la première couleur.

6. Motocycle (1000) selon l'une quelconque des revendications précédentes, dans lequel une partie avant le marchepied (15) et proche d'une fourche avant (20) associée est formée avec un élément de renforcement (12).
